# EUROPEAN PATENT APPLICATION

(11) **EP 3 470 473 A1**
(43) Date of publication of application: **17.04.2019**
(21) Application number: 17812655.3
(22) Date of filing: 12.06.2017
(51) Int. Cl.: C09C 3/04, C09C 3/00, C09C 1/02, C09C 1/40, C09C 1/00

(54) **PREPARATION METHOD FOR HYDROPHOBIC INORGANIC POWDER MATERIAL**

(30) Priority: 14.06.2016 CN 201610415981
(71) Applicant: Technical Institute of Physics and Chemistry of the Chinese Academy of Sciences, Haidian District Beijing 100190 (CN)
(72) Inventor: WU, Min, Beijing 100190 (CN); HUANG, Yong, Beijing 100190 (CN); ZHAO, Mengmeng, Beijing 100190 (CN)
(74) Representative: MFG Patentanwälte Meyer-Wildhagen Meggle-Freund Gerhard PartG mbB
(86) International application number: PCT/CN2017/087871
(87) International publication number: WO 2017/215544

(57) **Abstract**

The present invention discloses a method for preparing a hydrophobic inorganic powder material, comprising the following steps: mixing and grinding an inorganic powder material and a hydrophobic material; and after grinding, the surface of the inorganic powder material being uniformly coated with the hydrophobic material, separating to remove the excessive hydrophobic material to obtain the hydrophobic inorganic powder material. The method is simple, low-cost and environmentally friendly. The present invention further discloses a hydrophobic inorganic powder material prepared by adopting the method, the particle size of the material is 0.01-500µm, the hydrophobic performance is excellent, and the water contact angle can reach 150°.

## Description

### TECHNICAL FIELD

The present invention relates to the technical field of inorganic powder materials, in particular to a method for preparing a hydrophobic inorganic powder material.

### BACKGROUND

Inorganic powder materials are widely used in chemical industry, medicine, pigments, dyes and other fields. In recent years, application of inorganic powder materials in aspects of chemical industry and new materials has become more active. However, due to the high specific surface energy and surface polarity of powders, particles are easily aggregated, and the affinity with organic substances is poor, such that powders cannot be well dispersed in the bulk of organic polymers or organic solvents. It is found that coating a layer of inorganic or organic substance on the surface of inorganic powders material could well improve the dispersibility, temperature resistance, weather resistance and chemical resistance of the materials. For example, in the invention patent CN104140692A, Chen Guoshu, et al., prepares nano-titanium dioxide powder with excellent hydrophobicity and light stability by performing surface modification to nano-titanium dioxide by adding oxidizing inorganic waterproof ingredients and organic waterproof ingredients. In CN101367548A, Yao Chao, et al., firstly coats the surface of the nuclear body of titanium dioxide with a layer of aluminum phosphate, then coats with a layer of silica hydrate, then coats with a layer of alumina hydrate, and finally performs organic surface treatment with surfactants to obtain hydrophobic nano-titanium dioxide powder. In CN101932661A, Fluorinated alkyl silane is covalently grafted onto the surface of inorganic particles to obtain hydrophobic and oleophobic inorganic particles. However, some of the preparation methods above need solvent, some are not environmentally friendly and the preparation methods are complex.

Therefore, it is necessary to provide a method for preparing hydrophobic inorganic powder material, which is simple, environmentally friendly and can realize high-efficiency production.

### BRIEF DESCRIPTION

The first purpose of the present invention is to provide a method for preparing a hydrophobic inorganic powder material. The method is simple, low-cost and environmentally friendly, the inorganic powder material with stable performance and excellent hydrophobic performance can be obtained, and the water contact angle of the obtained hydrophobic inorganic powder material can be up to 120 ° -150°.

The second purpose of the present invention is to provide a hydrophobic inorganic powder material prepared by adopting the above-mentioned method. The hydrophobic inorganic powder material has stable performance and good hydrophobicity, and the transverse particle size can be controlled within 0.01-500µm.

In order to achieve the first purpose, the present invention adopts the following technical solution:
A method for preparing a hydrophobic inorganic powder material comprises the following steps:
mixing and grinding an inorganic powder material and a hydrophobic material; and
after grinding, the surface of the inorganic powder material being uniformly coated with the hydrophobic material, separating to remove the excessive hydrophobic material to obtain the hydrophobic inorganic powder material.

In the method, the inorganic powder material may be any of inorganic materials such as metals and compounds thereof, non-metals and compounds thereof, and inorganic minerals. Further, the metals are one or more selected from a group consisting of iron, aluminum, titanium, zinc, calcium, copper, manganese, barium, zirconium, lead, magnesium, chromium and nickel; the metal compounds are one or more selected from a group consisting of oxides of corresponding metals and metal salts; the non-metals and compounds thereof are one or more selected from a group consisting of diamond, silicon, silicon carbide, boron carbide and boron nitride; and the inorganic minerals are one or more selected from a group consisting of kaolin, montmorillonite, mica, ore and artificial silicate.

Preferably, the metals are one or more selected from a group consisting of iron, aluminum, titanium, zinc and calcium; correspondingly, the oxides of the metals may be iron oxide, aluminum oxide, titanium dioxide and zinc oxide; the non-metal compounds are one or more selected from a group consisting of diamond, silicon carbide, boron carbide and boron nitride; and the inorganic minerals are one or more selected from a group consisting of kaolin, montmorillonite and mica.

Further, in the method, the hydrophobic material is a material with low surface energy and is one or more selected from a group consisting of fluorine-containing polymers, polyolefins and derivatives thereof, polyesters and polyamides;
further, the fluorine-containing polymers are one or more selected from a group consisting of polytetrafluoroethylene, polyvinylidene fluoride, fluorinated ethylene propylene copolymer, ethylene trifluorochloroethylene and fluorinated alkyl silane;
preferably, the polyolefins are one or more selected from a group consisting of polyethylene, polypropylene and polystyrene;
preferably, the polyesters are one or more selected from a group consisting of polyethylene glycol terephthalate, polymethyl methacrylate, polybutylene succinate and polycarbonate; and
preferably, the polyamides are one or two selected from a group consisting of nylon 66 and nylon 1010.

Further, the grinding is performed in a ball mill or a grinding instrument, the grinding speed is 200-540rpm and the grinding time is 2-30h.

Further, the ball mill or grinding instrument is selected from a group consisting of a planetary ball mill, a vibratory ball mill and a mortar-type ball mill.

Further, a method for separating to remove the excessive hydrophobic material in the preparation method of present invention is to separate to remove the excessive hydrophobic material by using a nylon or stainless steel sieve.

In the method provided by the present invention, the inorganic powder material and the hydrophobic material are ground together in combination with a mechanochemical method, such that the mechanical forces such as crushing, grinding and friction forces are applied to the inorganic powder material and the hydrophobic material in the present invention. The surface of the inorganic powder material is activated to promote chemical reaction or mutual adhesion between the powder and hydrophobic material, so as to achieve the purpose of surface hydrophobic modification. The inventor of the present invention also finds that the method has the most obvious hydrophobic treatment effect on the inorganic powder material in the present invention through a large number of experiments. The entire method avoids the use of solvents, and the method is environmentally friendly.

In order to achieve the second purpose, the present invention adopts the following technical solution:
The present invention further protects a hydrophobic inorganic powder material prepared by adopting the method, the particle size of the hydrophobic inorganic powder material is 0.01-500µm, and the water contact angle is 120 ° -150°.

Preferably, the particle size of the hydrophobic inorganic powder material is 0.1-10µm; and more preferably, the particle size of the hydrophobic inorganic powder material is 0.1-5µm.

The type, shape and mixing proportion of the hydrophobic inorganic powder material in the present invention may be controlled by people skilled in the art according to experience.

### The present invention has the following beneficial effects:

By simple mechanical compounding of the inorganic powder and the hydrophobic material, the method is simple, environmentally friendly and easy to operate, such that the hydrophobic inorganic powder material has good hydrophobicity and stable performance.

### Description of the Drawings

The specific embodiments of the present invention will be described below in further detail with reference to the drawings.
FIG. 1 illustrates morphology pictures of diamond micro-powder before and after grinding in embodiment 1.
FIG. 2 illustrates a dispersion picture of hydrophobic diamond micro-powder in water in embodiment 1.
FIG. 3 illustrates water contact angles before and after hydrophobic modification of diamond micro-powder in embodiment 1.

### Description of the Embodiments

In order to explain the present invention more clearly, the present invention will be further described in connection with the preferred embodiments and the drawings. Similar parts in the drawings are represented by the same reference signs. It should be understood by people skilled in the art that the contents described below are descriptive rather than restrictive, and should not limit the protection scope of the present invention.

### Embodiment 1

A method for preparing hydrophobic diamond micro-powder comprises the following steps:
Diamond micro-powder was dried for 4h in vacuum at 80°C, 4g of the dried diamond micro-powder were taken and were subjected to ball milling with PTFE for compounding for 12h in a planetary ball mill, grinding balls were zirconium oxide balls with diameter of 8cm and mass of 130g, and the grinding speed was 500r/min. The compounded diamond micro-powder was separated from the excessive PTFE by using a nylon or stainless steel sieve to obtain the hydrophobic diamond micro-powder.

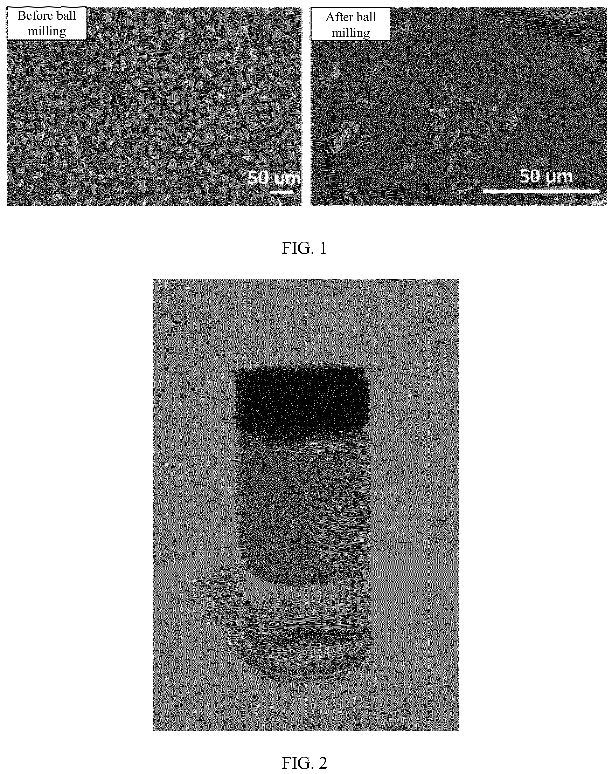

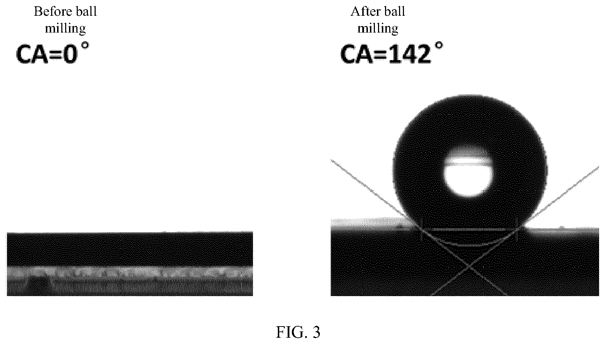

FIG. 1 illustrates morphology pictures of diamond micro-powder before and after grinding, wherein the size of the diamond particles before ball milling was 15-20µm and the size after ball milling was 0.1-7µm. FIG. 2 illustrates a dispersion picture of hydrophobic diamond micro-powder in water in embodiment 1, wherein different from settlement of the diamond micro-powder before hydrophobic modification in water, the diamond micro-powder after hydrophobic modification repelled water in water. The diamond micro-powder was pressed into thin sheets with a thickness of 1mm at 10MPa for water contact angle measurement. FIG. 3 illustrates water contact angles before and after hydrophobic modification of diamond micro-powder in embodiment 1. It can be seen that the water contact angle before hydrophobic modification was 0° and the water contact angle after hydrophobic modification could reach 142°.

### Embodiment 2

A method for preparing hydrophobic silicon carbide micro-powder comprises the following steps:
Silicon carbide micro-powder was dried for 4h in vacuum at 80°C, 4g of the dried silicon carbide micro-powder were taken, and hydrophobic silicon carbide micro-powder was obtained according to the method in embodiment 1. The particle size of the obtained hydrophobic silicon carbide micro-powder was 0.1-0.5µm. The silicon carbide micro-powder was pressed into thin sheets with thickness of 1mm at 10Mpa for contact angle measurement. The water contact angle before hydrophobic modification was 0° and the water contact angle after hydrophobic modification could reach 136°.

### Embodiment 3

A method for preparing hydrophobic aluminum oxide powder comprises the following steps:
Aluminum oxide powder was dried for 4h in vacuum at 80°C, 4g of the dried aluminum oxide powder were taken, and hydrophobic aluminum oxide powder was obtained according to the method in embodiment 1. The particle size of the obtained hydrophobic aluminum oxide powder was 0.1-1µm. The aluminum oxide powder was pressed into thin sheets with thickness of 1mm at 10Mpa for contact angle measurement. The water contact angle before hydrophobic modification was 0° and the water contact angle after hydrophobic modification could reach 150°.

### Embodiment 4

A method for preparing hydrophobic nano-titanium dioxide comprises the following steps:
Nano-titanium dioxide was dried for 4h in vacuum at 80°C, 4g of the dried titanium dioxide powder were taken, and hydrophobic nano-titanium dioxide was obtained according to the method in embodiment 1. The particle size of the obtained hydrophobic titanium dioxide was 0.1-0.2µm. The titanium dioxide powder was pressed into thin sheets with thickness of 1mm at 10Mpa for contact angle measurement. The water contact angle before hydrophobic modification was 0° and the water contact angle after hydrophobic modification could reach 143°.

### Embodiment 5

A method for preparing hydrophobic reduced iron powder comprises the following steps:
Reduced iron powder was dried for 4h in vacuum at 80°C, 4g of the dried reduced iron powder were taken, and hydrophobic iron powder was obtained according to the method in embodiment 1. The particle size of the obtained hydrophobic iron powder was 0.5-5µm. The iron powder was pressed into thin sheets with thickness of 1mm at 10Mpa for contact angle measurement. The water contact angle before hydrophobic modification was 17.8° and the water contact angle after hydrophobic modification could reach 138°.

### Embodiment 6

A method for preparing hydrophobic calcium carbonate powder comprises the following steps:
Calcium carbonate powder was dried for 4h in vacuum at 80°C, 4g of the dried calcium carbonate powder were taken, and hydrophobic calcium carbonate powder was obtained according to the method in embodiment 1. The particle size of the obtained hydrophobic calcium carbonate powder was 0.1-5µm. The calcium carbonate powder was pressed into thin sheets with thickness of 1mm at 10Mpa for contact angle measurement. The water contact angle before hydrophobic modification was 0° and the water contact angle after hydrophobic modification could reach 124°.

### Embodiment 7

A method for preparing hydrophobic kaolin comprises the following steps:
Kaolin was dried for 4h in vacuum at 80°C, 4g of the dried kaolin were taken, and hydrophobic kaolin was obtained according to the method in embodiment 1. The particle size of the obtained kaolin was 0.1-0.5µm. The kaolin was pressed into thin sheets with thickness of 1mm at 10Mpa for contact angle measurement. The water contact angle before hydrophobic modification was 0° and the water contact angle after hydrophobic modification could reach 120°.

### Embodiment 8

A method for preparing hydrophobic diamond micro-powder comprises the following steps:
Diamond micro-powder was dried for 4h in vacuum at 80°C, 4g of the dried diamond micro-powder were taken and were subjected to ball milling with PVDF for compounding for 12h in a planetary ball mill, grinding balls were zirconium oxide balls with diameter of 8cm and mass of 130g, and the grinding speed was 540r/min. The compounded diamond micro-powder was separated from the excessive PVDF by using a stainless steel sieve to obtain the hydrophobic diamond micro-powder. The size of the obtained hydrophobic diamond micro-powder was 0.1-1µm. The diamond micro-powder was pressed into thin sheets with thickness of 1mm at 10Mpa. The water contact angle after hydrophobic modification could reach 135°.

### Embodiment 9

A method for preparing hydrophobic aluminum oxide powder comprises the following steps:
Aluminum oxide powder was dried for 4h in vacuum at 80°C, 4g of the dried aluminum oxide powder were taken and were subjected to ball milling with PP for compounding for 12h in a planetary ball mill, grinding balls were zirconium oxide balls with diameter of 8cm and mass of 130g, and the grinding speed was 540r/min. The compounded aluminum oxide was separated from the excessive PP by using a stainless steel sieve to obtain the hydrophobic aluminum oxide powder. The size of the obtained hydrophobic aluminum oxide powder was 0.4-2µm. The aluminum oxide powder was pressed into thin sheets with thickness of 1mm at 10Mpa. The water contact angle after hydrophobic modification could reach 122°.

### Embodiment 10

A method for preparing hydrophobic kaolin comprises the following steps:
Kaolin was dried for 4h in vacuum at 80°C, 4g of the dried kaolin were taken and were subjected to ball milling with HDPE for compounding for 12h in a planetary ball mill, grinding balls were zirconium oxide balls with diameter of 8cm and mass of 130g, and the grinding speed was 540r/min. The compounded aluminum oxide was separated from the excessive HDPE by using a stainless steel sieve to obtain the hydrophobic kaolin. The particle size of the obtained hydrophobic kaolin was 0.1-µm. The kaolin was pressed into thin sheets with thickness of 1mm at 10Mpa for contact angle measurement. The water contact angle before hydrophobic modification was 0° and the water contact angle after hydrophobic modification could reach 134°.

### Comparative example 1

Silicon dioxide powder was dried for 4h in vacuum at 80°C, 4g of the dried silicon dioxide powder were taken and were subjected to ball milling with PTFE for compounding for 12h in a planetary ball mill, grinding balls were zirconium oxide balls with diameter of 8cm and mass of 130g, and the grinding speed was 500r/min. The compounded silicon dioxide powder was separated from the excessive PTFE by using a nylon or stainless steel sieve. The silicon dioxide powder was pressed into thin sheets with thickness of 1mm at 10Mpa for contact angle measurement. The water contact angle before ball milling was 0° and the water contact angle after grinding for compounding with PTFE was 0°. The hydrophobicity was not improved.

### Comparative example 2

Graphite was dried for 4h in vacuum at 80°C, 4g of the dried graphite were taken and were subjected to ball milling with PTFE for compounding for 12h in a planetary ball mill, grinding balls were zirconium oxide balls with diameter of 8cm and mass of 130g, and the grinding speed was 500r/min. The compounded graphite was separated from the excessive PTFE by using a nylon or stainless steel sieve. The graphite was pressed into thin sheets with thickness of 1mm at 10Mpa for contact angle measurement. The water contact angle before ball milling was 70.3° and the water contact angle after grinding for compounding with PTFE was 38.4°. The hydrophobicity was not improved.

### Comparative example 3

Diatomite was dried for 4h in vacuum at 80°C, 4g of the dried diatomite were taken and were subjected to ball milling with PTFE for compounding for 12h in a planetary ball mill, grinding balls were zirconium oxide balls with diameter of 8cm and mass of 130g, and the grinding speed was 500r/min. The compounded diatomite was separated from the excessive PTFE by using a nylon or stainless steel sieve. The diatomite was pressed into thin sheets with thickness of 1mm at 10Mpa for contact angle measurement. The water contact angle before ball milling was 0° and the water contact angle after grinding for compounding with PTFE was 7.1°. The hydrophobicity was almost not improved.

Obviously, the above-mentioned embodiments of the present invention are merely examples to clearly describe the embodiments of the present invention, instead of limitations to the embodiments of the present invention. People skilled in the art may make other different types of variations or changes on the basis of the above-mentioned description. It is impossible to exhaust all embodiments here. Obvious variations or changes derived from the technical solution of the present invention shall be still within the protection scope of the present invention.

## Claims

1. A method for preparing a hydrophobic inorganic powder material, **characterized in that** the method comprises the following steps:
mixing and grinding an inorganic powder material and a hydrophobic material; and
after grinding, the surface of the inorganic powder material being uniformly coated with the hydrophobic material, separating to remove the excessive hydrophobic material to obtain the hydrophobic inorganic powder material.

2. The method according to claim 1, **characterized in that** the inorganic powder material is one selected from a group consisting of metals and compounds thereof, non-metals and compounds thereof, and inorganic minerals.

3. The method according to claim 2, **characterized in that** the metals are one or more selected from a group consisting of iron, aluminum, titanium, zinc, calcium, copper, manganese, barium, zirconium, lead, magnesium, chromium and nickel; the metal compounds are one or more selected from a group consisting of oxides of corresponding metals and metal salts; the non-metals and compounds are one or more selected from a group consisting of diamond, silicon, silicon carbide, boron carbide and boron nitride; and the inorganic minerals are one or more selected from a group consisting of kaolin, montmorillonite, mica, ore and artificial silicate.

4. The method according to claim 2, **characterized in that**, preferably, the metals are one or more selected from a group consisting of iron, aluminum, titanium, zinc and calcium; the non-metal compounds are one or more selected from a group consisting of diamond, silicon carbide, boron carbide and boron nitride; and the inorganic minerals are one or more selected from a group consisting of kaolin, montmorillonite and mica.

5. The method according to claim 1, **characterized in that** the hydrophobic material is a material with low surface energy and is one or more selected from a group consisting of fluorine-containing polymers, polyolefins and derivatives thereof, polyesters and polyamides;
preferably, the fluorine-containing polymers are one or more selected from a group consisting of polytetrafluoroethylene, polyvinylidene fluoride, fluorinated ethylene propylene copolymer, ethylene trifluorochloroethylene and fluorinated alkyl silane;
preferably, the polyolefins are one or more selected from a group consisting of polyethylene, polypropylene and polystyrene;
preferably, the polyesters are one or more selected from a group consisting of polyethylene glycol terephthalate, polymethyl methacrylate, polybutylene succinate and polycarbonate; and
preferably, the polyamides are one or two selected from a group consisting of nylon 66 and nylon 1010.

6. The method according to claim 1, **characterized in that** the grinding is performed in a ball mill or a grinding instrument, the grinding speed is 200-540rpm and the grinding time is 2-30h.

7. The method according to claim 1, **characterized in that** the ball mill or grinding instrument is selected from a group consisting of a planetary ball mill, a vibratory ball mill and a mortar-type ball mill.

8. The method according to claim 1, **characterized in that** a method for separating to remove the excessive hydrophobic material is to separate to remove the excessive hydrophobic material by using a nylon or stainless steel sieve.

9. A hydrophobic inorganic powder material prepared by adopting the method according to claim 1, **characterized in that** the particle size of the hydrophobic inorganic powder material is 0.01-500µm, and the water contact angle of the hydrophobic inorganic powder material is 120-150°.

10. The hydrophobic inorganic powder material according to claim 9, **characterized in that**, preferably, the particle size of the hydrophobic inorganic powder material is 0.1-10µm; and more preferably, the particle size of the hydrophobic inorganic powder material is 0.1-5µm.
